# EUROPÄISCHE PATENTANMELDUNG

(11) **EP 1 946 869 A2**
(43) Veröffentlichungstag der Anmeldung: **23.07.2008**
(21) Anmeldenummer: 07023309.3
(22) Anmeldetag: 01.12.2007
(51) Int. Cl.: B23B 31/26, B23B 31/103

(54) **Werkzeugspanner mit Selbsthaltefunktion**

(30) Priorität: 17.01.2007 DE 102007002559
(71) Anmelder: Witzig & Frank GmbH, 77652 Offenburg (DE)
(72) Erfinder: Bauer, Walter, 75397 Simmozheim (DE)
(74) Vertreter: Rüger, Barthelt & Abel Patentanwälte

(57) **Zusammenfassung**

Der erfindungsgemäße Werkzeughalter weist Spannfinger (20) auf, die zueinander parallel und wenigstens mit ihren Spannköpfen (25) jeweils paarweise aneinander anliegend angeordnet sind. Jeder Spannfinger (20) ist mit einem Längs- und Radialschlitz versehen, wodurch zwei aufeinander zu federnde Schenkel ausgebildet sind. Die aneinander anliegenden Spannfinger bilden ein Rastmittel, um den Werkzeughalter (2) mit überwindbarer Kraft in dem Werkzeugspanner (1) rastend zu halten.

## Beschreibung

Die Erfindung betrifft einen Werkzeugspanner, insbesondere zum Einsatz in Arbeitsspindeln von Werkzeugmaschinen.

Werkzeuge zur spanenden Werkstückbearbeitung sind in der Regel an Werkstückhaltern befestigt, die mit Arbeitsspindeln einer Werkzeugmaschine verbunden und von diesen gelöst werden können. Solche Werkzeughalter werden von automatischen Werkzeugwechselsystemen ergriffen und in eine entsprechende Aufnahme bzw. einen Werkzeugspanner einer Arbeitsspindel.eingesetzt und aus diesem herausgeführt. Die Greifereinrichtungen können den Werkzeughalter nebst Werkzeug dann zu einem Werkzeugmagazin überführen oder von diesem herbeischaffen.

Zur Herstellung einer drehfesten Verbindung zwischen der Arbeitsspindel und dem Werkzeughalter dient in der Regel ein Werkzeugspanner mit einer Anlagefläche für den Werkzeughalter und mit Spannmitteln zum form- und/oder reibschlüssigen Spannen des Werkzeughalters. Wenn der Werkzeuggreifer den Werkzeughalter nebst Werkzeug von dem Werkzeugspanner entfernen soll, muss die Spannvorrichtung nach dem Andocken des Greifers gelöst werden, um den Werkzeughalter freizugeben. Die dazu erforderliche Zeit geht von der Arbeitszeit der Werkzeugmaschine ab. Bei häufigem Werkzeugwechsel summieren sich diese zum Spannen und Freigeben des Werkzeughalters erforderlichen Zeiten zu einem Zeitanteil, der die Produktivität der Werkzeugmaschine merklich beeinträchtigen kann.

Aus der Praxis ist ein Werkzeugspanner mit Spannfingern bekannt, die an ihrem Außenumfang eine Spannschulter zum Spannen eines Werkzeughalters aufweisen. In Spannposition werden die Spannfinger von einem Spannkonus radial nach außen getrieben. Ist der Konus gelöst, verhindern zwischen den Spannfingern vorhandene Gummielemente eine radial nach innen gerichtete Ausweichbewegung der Spannfinger und halten somit die Spannfinger nachgiebig in Spannposition. Dadurch kann der Spannkonus bereits gelöst werden, bevor der Werkzeuggreifer den Werkzeughalter ergriffen hat. Es kommt somit zu einer Reduktion der zum Spannen erforderlichen Zeit. Jedoch verschleißen die Elastomerpuffer relativ schnell. Es wird deshalb nach einem Werkzeugspanner gesucht, der einerseits eine nachgiebige Haltefunktion erbringt, um den Werkzeughalter bereits vor dem Andocken des Werkzeuggreifers lösen zu können und der andererseits robust und dauerhaft ist.

Diese Aufgabe wird mit dem Werkzeugspanner nach Anspruch 1 gelöst:

Der erfindungsgemäße Werkzeugspanner weist eine Anzahl von Spannfingern auf, die in dem Aufnahmeraum eines Körpers paarweise zueinander benachbart aneinander anliegend konzentrisch zu einer mittigen Ausnehmung des Körpers angeordnet sind, wobei zumindest einige der Spannfinger einen Längsschlitz aufweisen. Dieser trennt den Spannfinger in zwei zueinander im Wesentlichen parallele Schenkel, die aufeinander zu und voneinander weg federn können. Auf diese Weise bilden die Schenkel einen Kranz, dessen Durchmesser sich unter Überwindung einer Federwirkung verringern lässt. Werden die Spannfinger radial nach innen gedrängt, werden ihre Schenkel in Umfangsrichtung aneinander angenähert. Die Schenkel wirken somit als Federelemente, die die Spannfinger in ihre Spannposition vorspannen. Mit dieser Konfiguration lassen sich Werkzeugspanner bauen, die in entspanntem Zustand die Werkzeughalter mit wohl definierter Haltekraft, beispielsweise 300 N, halten. Die Haltewirkung genügt für eine ausreichend sichere Positionierung zum Andocken des Werkzeuggreifers. Der Werkzeuggreifer hat seinerseits ausreichend Kraft zur Überwindung dieser Haltekraft, die wie eine Rastwirkung in Erscheinung tritt. Werkzeughalter können somit in den Werkzeugspanner unter Überwindung einer Rastkraft eingesetzt und aus diesem heraus gezogen werden.

Der Verzicht auf gesonderte Federn und insbesondere der Verzicht auf Gummi oder Elastomerelemente führt zu einer robusten und kostengünstigen Lösung für den Werkzeugspanner mit wohl definierter und gut reproduzierbarer Rastkraft.

Weitere Einzelheiten vorteilhafter Ausführungsformen der Erfindung sind Gegenstand der Zeichnung, der Beschreibung oder von Ansprüchen. Die Beschreibung beschränkt sich dabei auf einige Aspekte der Erfindung und sonstiger Gegebenheiten. Zur Ergänzung ist die Zeichnung heranzuziehen. Der Fachmann kann der Zeichnung weitere Einzelheiten entnehmen. Die Zeichnung ist dabei nicht maßstäblich. Sie dient zur Veranschaulichung des grundsätzlichen Aufbaus und Funktionsprinzips, wobei für die Erfindung bedeutungslose Einzelheiten weg gelassen worden sind. Es zeigen:
Figur 1 einen Werkzeugspanner in Prinzipdarstellung im Längsschnitt,
Figur 2 den Werkzeugspanner nach Figur 1 in vereinfachter Querschnittsdarstellung,
Figur 3 den Werkzeugspanner nach Figur 1 nach dem Lösen seines Spannkonus,
Figur 4 einen Spannfinger des Werkzeugspanners in Radialansicht und
Figur 5 den Spannfinger nach Figur 4 in prinzipieller Perspektivdarstellung.

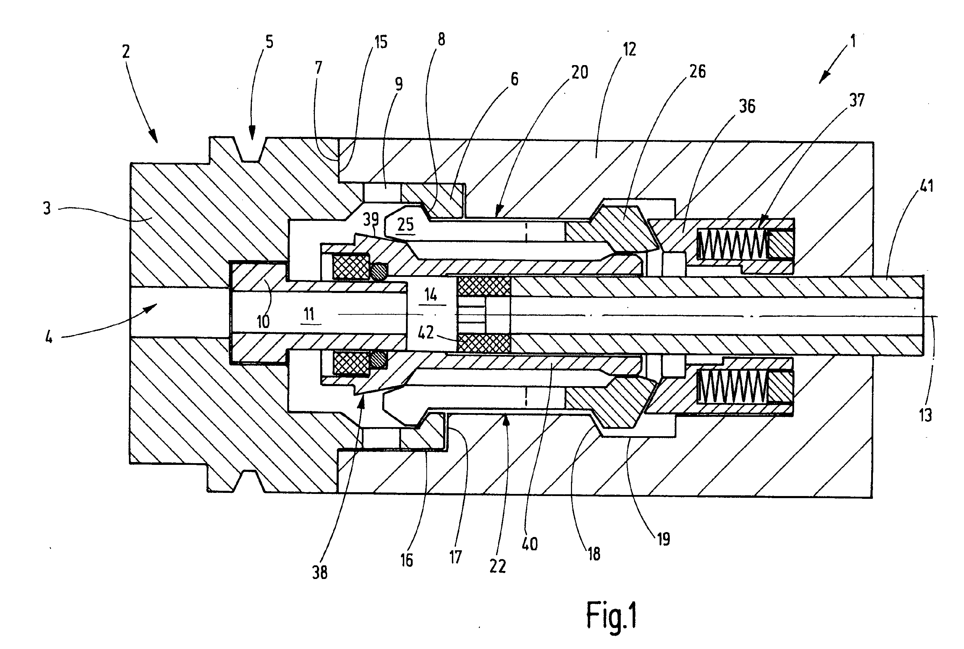

In Figur 1 ist ein Werkzeugspanner 1 veranschaulicht, der zur Verbindung eines nicht weiter veranschaulichten Werkzeugs mit einer ebenfalls nicht veranschaulichten Arbeitsspindel einer Werkzeugmaschine dient. Das Werkzeug ist vorzugsweise in einem Werkzeughalter 2 gesockelt, der zur Aufnahme des Werkzeugs einen zumindest ungefähr rotationssymmetrischen Körper 3 aufweist. Dieser ist zur Aufnahme des Werkzeugs mit einer Zentralbohrung 4 versehen. An dem Körper 3 kann außen eine ringsum laufende Nut 5 zum Ansatz eines Werkzeuggreifers vorgesehen sein. Der die Nut 5 umgebende Bereich des Körpers 3 bildet eine Greifscheibe.

Von der Rückseite des Körpers 3 erstreckt sich ein etwa rohrförmiger Spannflansch 6 weg, dessen Außendurchmesser geringer ist als der größte Außendurchmesser des Körpers 3. Der Spannflansch 6 ist von einer ringförmigen Planfläche 7 umgeben, die als Bezugs- und Anlagefläche dient.

Der Spannflansch 6 ist rohrartig ausgebildet. In der Nähe seines freien Endes weist er eine konische, nach innen weisende Spannfläche 8 auf. Der Spannflansch 6 kann mit ein oder mehreren Radialbohrungen 9 versehen sein. Konzentrisch zu der Zentralbohrung 4 kann in dem Werkzeughalter 2 ein Anschlussstück 10 zur Zuführung von Kühlmittel oder Kühlschmiermittel zu dem Werkzeug des Werkzeughalters 2 angeordnet sein. Das Anschlussstück 10 ist dazu mit einem entsprechenden Zentralkanal 11 versehen.

Der Werkzeugspanner 1 weist einen vorzugsweise rotationssymmetrischen Körper 12 auf, der um eine Drehachse 13 drehbar gelagert ist. Er ist beispielsweise an einer Arbeitsspindel einer Werkzeugmaschine befestigt oder Teil derselben. Er kann jedoch auch unverdrehbar gelagert sein und beispielsweise Teil einer Werkzeugspeicher- oder Werkzeugtransportvorrichtung oder Teil einer sonstigen Werkzeughalteeinrichtung, beispielsweise zum Einrichten eines Werkzeugs sein.

Der Körper 12 weist einen Aufnahmeraum 14 auf, der vorzugsweise rotationssymmetrisch ausgebildet und koaxial zu der Drehachse 13 angeordnet ist. Der Aufnahmeraum 14 schließt an eine axiale ebene Stirnfläche 15 des Körpers 12 an, die als Anlage- und Bezugsfläche für die Planfläche 7 dient.

An die Stirnfläche 15 schließt sich eine Zylinderfläche 16 an, deren Innendurchmesser nur geringfügig größer als der Außendurchmesser des Spannflansches 6 ist. Der als Bohrung ausgebildete Aufnahmeraum 14 ist dann weiter abgestuft. Im Anschluss an die Zylinderfläche 16 geht der Durchmesser des Aufnahmeraums 14 bei einer Stufe 17 auf einen geringeren Wert über, um sich dann an einer vorzugsweise konischen Stufe 18 wieder aufzuweiten. Die Stufen 17, 18 können auch als Ringschultern angesehen werden. Die Stufe 18 begrenzt einen Halteraum 19.

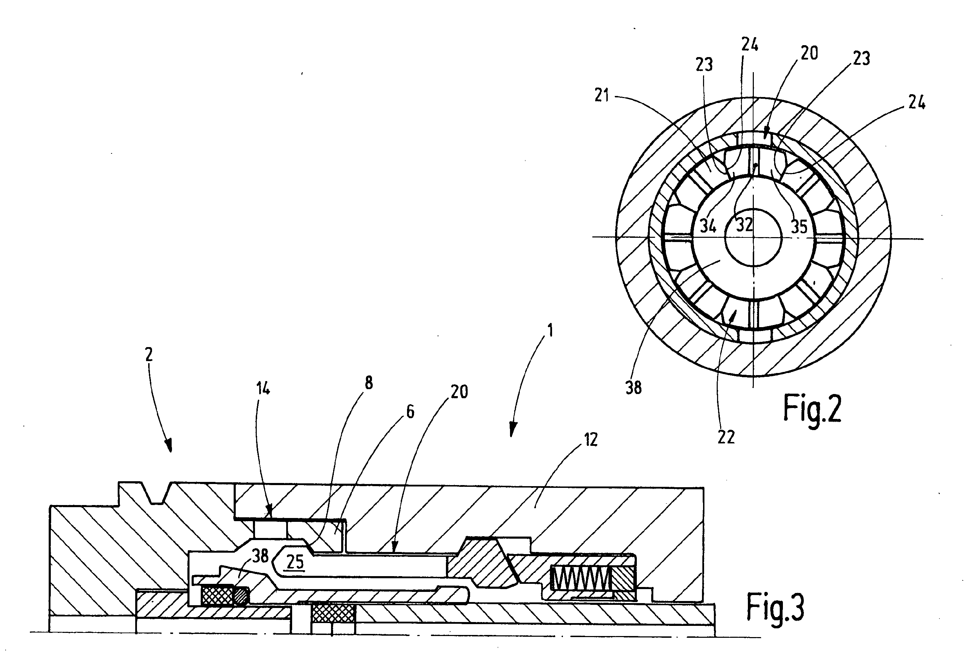

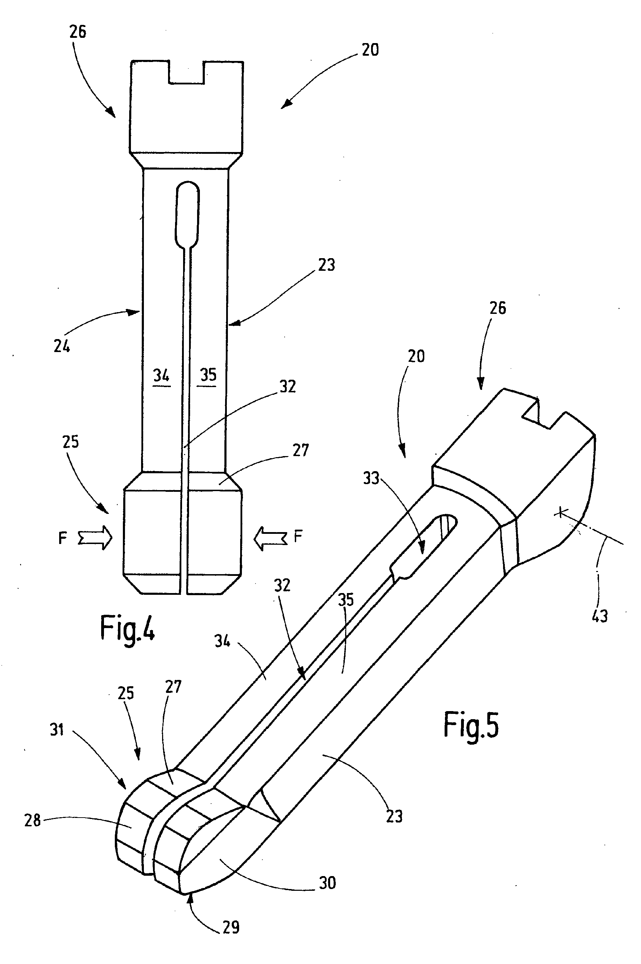

In dem Aufnahmeraum 14 ist eine Anzahl von Spannfingern 20, 21, 22 angeordnet, die insbesondere aus Figur 2 in Stirnansicht ersichtlich sind. Die Spannfinger 20, 21, 22 sowie weitere Spannfinger sind untereinander gleich ausgebildet und ergänzen sich, wie Figur 2 zeigt, zu einem Kranz der einen etwa zylindrischen Innenraum umschließt. Die Spannfinger 20, 21 sind einander benachbart und liegen dabei mit ihren Flanken 23, 24 aneinander an. Alle Spannfinger 20, 21, 22 (sowie alle weiteren, die kein gesondertes Bezugszeichen tragen) sind untereinander vorzugsweise gleich ausgebildet. Der Spannfinger 20 ist deshalb in den Figuren 4 und 5 stellvertretend für alle anderen Spannfinger veranschaulicht und wird nachfolgend beschrieben.

Der Spannfinger 20 besteht vorzugsweise vollständig aus Metall, vorzugsweise Stahl. Er ist ein längliches Element, das in dem Werkzeugspanner 1 in Längsrichtung, d.h. im Wesentlichen parallel zu der Drehachse 13 angeordnet ist. Er weist an einem Ende einen Spannkopf 25 und an seinem anderen Ende einen Haltefuß 26 auf. Der Spannkopf 25 steht in Radialrichtung nach außen über den sonstigen Körper des Spannfingers 20 über. An der der Spannfläche 8 zugewandten Seite weist er eine Spannfläche 27 auf, die einer Konusfläche folgt. An der gegenüber liegenden Seite des Spannkopfs 25 ist eine Schrägfläche 28 ausgebildet, die als Rastfläche dient. An seiner Innenseite ist der Spannkopf 25 mit einer Druckfläche 29 versehen, die schräg zu der Drehachse 13 angeordnet ist.

Der Haltefuß 26 wird durch einen Abschnitt des Spannfingers 20 gebildet, der in Radialrichtung etwas dicker ist als der übrige Spannfinger 20. Die Breite des Halteabschnitts 26 übersteigt jedoch die Breite des sonstigen Spannfingers 20 nicht. Somit sind die Flanken 23, 24 des Spannfingers 20 als im Wesentlichen ebene zueinander parallele Flächen ausgebildet. Im Bereich des Spannkopfs 25 können an den Flanken 23, 24 Facetten 30, 31 vorgesehen sein, wodurch benachbarte Spannfinger nur im Bereich ihrer Spannköpfe 25 aneinander anliegen.

Der Spannfinger 20 ist mit einem sich in Axial- und Radialrichtung erstreckenden Schlitz 32 versehen, der in der Nähe des Haltefußes 26 in einer Erweiterung 33 endet. Dadurch ist der Spannfinger 20 in zwei Schenkel 34, 35 unterteilt, die aufeinander zu und voneinander weg federn können. Figur 4 und Figur 5 veranschaulichen die entspannte Position. Dass die Schenkel 34, 35 durch Beaufschlagung mit einer geeigneten Kraft zusammengedrückt werden können, zeigen in Figur 4 die Pfeile F.

Die Spannfinger 20, 22 (sowie alle Weiteren) sind, wie Figur 1 zeigt, mit ihren Haltefüßen 26 in dem Halteraum 19 angeordnet. Die Haltefüße 26 liegen aneinander an, so dass sie sich gegenseitig abstützen und auf einem definierten Durchmesser halten. Eine axial vorgespannte Hülse 36 drückt auf die Haltefüße 26, so dass diese an der Stufe 18 anliegen. Die Hülse 36 kann durch ein oder mehrere Federmittel, beispielsweise ein oder mehrere Schraubenfedern 37, axial nach vorn, d.h. auf die Spannfinger 20, 22 hin gespannt sein.

Den Spannfingern 20, 22 ist ein Spannkonus 38 zugeordnet, dessen Konusfläche 39 mit der Druckfläche 29 jedes Spannfingers 20, 22 in Anlage steht. Der Spannkonus 38 weist eine Durchgangsbohrung auf und setzt sich in einer Spannhülse 40 fort. Diese ist mit einer Spannstange 41 verschraubt, über die eine Zugkraft auf den Spannkonus 38 ausgeübt werden kann. Diese Zugkraft dient dazu, den Spannkonus 38 zwischen die Spannfinger 20, 22 zu treiben, um die Spannfinger 20, 22 radial nach außen vorzuspannen und, falls nötig, zu spreizen. Die Spannstange 41 kann durch eine Kontermutter 42 in der Spannhülse 40 gesichert sein.

In dem vorderen Ende des Durchgangskanals des Spannkonus 38 können ein oder mehrere Dichtungsmittel vorgesehen sein, um an dem Anschlussstück 10 abzudichten und somit einen Fluidkanal festzulegen, der sich durch die Spannstange 41 und über den Zentralkanal 11 hindurch bis zu dem Werkzeug erstreckt.

Der insoweit beschriebene Werkzeugspanner 1 arbeitet wie folgt:
Figur 1 veranschaulicht die Spannstellung. Die Spannstange 41 ist nach rechts gespannt. Der Spannkonus 38 treibt die Spannfinger 20, 22 radial nach außen. Diese pressen somit mit ihrer Spannfläche 27 gegen die Spannfläche 8 und ziehen somit den Werkzeughalter 2 mit seiner Planfläche 7 gegen die Stirnfläche 15. Außerdem zentriert der Spannflansch 6 den Werkzeughalter 2 in dem Körper 12.

Soll ein Werkzeugwechsel vorgenommen werden, wird als vorbereitende Maßnahme der Spannkonus 38 gelöst. Dazu wird die Spannstange 41 von den Spannfingern 20, 22 weg in Axialrichtung auf den Werkzeughalter 2 hin bewegt. Dieser Zustand ist in Figur 3 veranschaulicht. Der Hub der Bewegung kann so groß sein, dass der Spannkonus 38 gerade noch nicht an dem Werkzeughalter 2 bzw. seinem Körper 3 anstößt . Die Spannfinger 20, 22 usw. werden somit nicht mehr durch den Spannkonus 38 in ihrer radial äußeren Position gehalten. Sie behalten diese Position jedoch nachgiebig bei. Der Grund ist aus Figur 2 ersichtlich. Sie liegen zumindest mit ihren Facetten 30, 31 oder gegebenenfalls auch mit größeren Teilen ihrer Flanken 23, 24 aneinander an. Jede Bewegung nach innen setzt voraus, dass die Schenkel 34, 35 jedes Spannfingers aufeinander zu bewegen, was nur gegen deren Federspannung möglich ist. Somit bleibt der Werkzeughalter 3 trotz Lösen des Spannkonus 38 zunächst an dem Werkzeugspanner 1 gehalten. Die Haltekraft kann dabei durch die Größe der Erweiterung 33, die Länge der Spannfinger 20, 21, 22, die Eigenschaften des Materials des Spannfingers 20, 21, 22 und die Breite des Schlitzes 32 sowie gegebenenfalls die Neigung der Spannfläche 27 eingestellt werden. Im vorliegenden Ausführungsbeispiel ist eine Halte- oder Rastkraft von etwa 300 N eingestellt.

Es dockt nun der für den Werkzeugwechsel vorgesehene Greifer an der Nut 5 an und zieht den Werkzeughalter 2 aus dem Körper 12 heraus. Die Spannfläche 8 des Spannflansches 6 drückt dabei den Spannkopf 25 nach innen. Die Spannfinger federn mit ihren Schenkeln 34, 35 dabei in Umfangsrichtung und führen gleichzeitig eine Neigebewegung aus, indem sie mit ihrem Spannkopf 25 nach innen ausweichen. Jeder Finger wird dabei um eine Schwenkachse 43 geschwenkt, die in Figur 5 angedeutet ist und eine Tangente an einem zu der Drehachse 13 konzentrischen Kreis darstellt.

Das Einführen eines neuen Werkzeughalters 2 in den Werkzeugspanner 1 erfolgt ebenfalls bei gelöstem Spannkonus 38. Der Werkzeugwechsler führt den Werkzeughalter 2 mit seinem Spannflansch 6 in den Aufnahmeraum 14 des Körpers 12 ein. Die Spannfinger 20, 21, 22 wirken wiederum als Rastmittel, weil der von den Spannköpfen 25 gebildete Kranz federnd radial nach innen ausweichen kann. Die Federwirkung wird dabei wiederum erreicht, indem die Schenkel 34, 35 jedes Spannfingers federnd aufeinander zu bewegt werden können. Während die Federkraft in Umfangsrichtung wirkt, weichen die Spannfinger 20 in Radialrichtung aus. Das Einführen des Werkzeughalters 2 in den Werkzeugspanner 1 kann mit geringerer Kraft erfolgen als das Herausziehen, wenn die Schrägfläche 28 einen flacheren Anstieg hat als die Spannfläche 27.

Der erfindungsgemäße Werkzeughalter weist Spannfinger 20 auf, die zueinander parallel und wenigstens mit ihren Spannköpfen 25 jeweils paarweise aneinander anliegend angeordnet sind. Jeder Spannfinger 20 ist mit einem Längs- und Radialschlitz versehen, wodurch zwei aufeinander zu federnde Schenkel ausgebildet sind. Die aneinander anliegenden Spannfinger bilden ein Rastmittel, um den Werkzeughalter 2 mit überwindbarer Kraft in dem Werkzeugspanner 1 rastend zu halten.

### Bezugszeichen

- 1: Werkzeugspanner
- 2: Werkzeughalter
- 3: Körper
- 4: Zentralbohrung
- 5: Nut
- 6: Spannflansch
- 7: Planfläche
- 8: Spannfläche
- 9: Radialbohrung
- 10: Anschlussstück
- 11: Zentralkanal
- 12: Körper
- 13: Drehachse
- 14: Aufnahmeraum
- 15: Stirnfläche
- 16: Zylinderfläche
- 17: Stufe
- 18: Stufe
- 19: Halteraum
- 20-22: Spannfinger
- 23: Flanke
- 24: Flanke
- 25: Spannkopf
- 26: Haltefuß
- 27: Spannfläche
- 28: Schrägfläche
- 29: Druckfläche
- 30: Facette
- 31: Facette
- 32: Schlitz
- 33: Erweiterung
- 34: Schenkel
- 35: Schenkel
- 36: Hülse
- 37: Schraubenfedern
- 38: Spannkonus
- 39: Konusfläche
- 40: Spannhülse
- 41: Spannstange
- 42: Kontermutter
- 43: Schwenkachse

## Patentansprüche

1. Werkzeugspanner (1), insbesondere für eine Arbeitsspindel einer Werkzeugmaschine,
mit einem Körper (12), an dem zumindest eine Anlagefläche (15) für einen Werkzeughalter (2) ausgebildet ist und der eine mittige Ausnehmung (14) aufweist,
mit einer Anzahl von Spannfingern (20), die jeweils zumindest einen Längsschlitz (32) aufweisen und in der Ausnehmung (14) paarweise zueinander benachbart aneinander anliegend konzentrisch zu der mittigen Ausnehmung (14) angeordnet sind.

2. Werkzeugspanner nach Anspruch 1, **dadurch gekennzeichnet,**
**dass** den Spannfingern (20) ein Spannkonus (38) zugeordnet ist, der mittels einer Spannstange (41) in einen von den Spannfingern (20) umschlossenen Raum hinein spannbar ist.

3. Werkzeugspanner nach Anspruch 1, **dadurch gekennzeichnet,**
**dass** die Spannfinger (20) an ihrer Außenseite eine Spannschulter (27) aufweisen.

4. Werkzeugspanner nach Anspruch 1, **dadurch gekennzeichnet,**
**dass** jeder Spannfinger (20) länglich ausgebildet ist und an einem Ende einen Spannkopf (25) und an seinem anderen Ende einen Haltefuß (26) aufweisen.

5. Werkzeugspanner nach Anspruch 1, **dadurch gekennzeichnet,**
**dass** benachbarte Spannfinger (20) mit ihren Spannköpfen (25) aneinander anliegen.

6. Werkzeugspanner nach Anspruch 1, **dadurch gekennzeichnet,**
**dass** benachbarte Spannfinger (20) mit ihren Haltefüßen (26) aneinander anliegen.

7. Werkzeugspanner nach Anspruch 4, **dadurch gekennzeichnet,**
**dass** der Längsschlitz (32) sich durch den Spannkopf (25) hindurch bis zu dem Haltefuß (26) erstreckt.

8. Werkzeugspanner nach Anspruch 4, **dadurch gekennzeichnet,**
**dass** die Spannfinger (20) in dem Körper (12) an ihren Haltefüßen (26) axial und radial fest gehalten sind.

9. Werkzeugspanner nach Anspruch 8, **dadurch gekennzeichnet,**
**dass** die Spannfinger (20) in dem Körper (12) mit radialer Beweglichkeit der Spannköpfe (25) gehalten sind.

10. Werkzeugspanner nach Anspruch 1, **dadurch gekennzeichnet,**
**dass** die Spannfinger (20) durch ihren sich in Axial- und Radialrichtung erstreckenden Schlitz (32) in zueinander im Wesentlichen parallele Schenkel (34, 35) unterteilt sind, die aufgrund der Eigenelastizität des Materials, aus dem die Spannfinger (20) bestehen, aufeinander zu federn.
